# EUROPEAN PATENT APPLICATION

(11) **EP 4 563 221 A1**
(43) Date of publication of application: **04.06.2025**
(21) Application number: 23461685.2
(22) Date of filing: 01.12.2023
(51) Int. Cl.: B01F 27/90, B01F 33/45, B01F 33/84, B01F 35/21, B01F 35/22, B01F 35/221, B01F 35/82, B01F 35/92, B01F 35/90, B01F 101/19

(54) **MIXING AND COLORING DEVICE FOR DENTAL RESINS**

(71) Applicant: UV Polimer Sp. z o. o., 03-215 Warszawa (PL)
(72) Inventor: Grabowski, Rafa, 00-232 Warszawa (PL); Kroczek, Beata, 05-091 Z bki (PL)
(74) Representative: AOMB Polska Sp. z.o.o.

(57) **Abstract**

The invention provides a mixing and dyeing device for dental resins for 3D printing and is arranged for contactless dyeing by mixing fluid ingredients. The device comprises a housing (1) with a stabilizing means (15), a mixing means which is arranged for mixing resin housed within a container (7), the container (7) provided within the housing, positioned concentrically with the mixing means, at least two pigment tanks (6), at least two dispensing means (4), a colour sensor (11) which based on a template colour is arranged for determining proper amounts of the resin pigments fed from the pigment tanks (6), a scales (9) positioned under the container (7), a device closing sensor, a temperature sensor, a control panel (12), characterized in that it comprises at least one heating means (10), which heating means (10) is arranged for heating resin within the container (7), and a mixing arm (5) has a tip enabling coupling replaceable mixing tips, and the colour sensor (11) is arranged for scanning the patient's dentition.

## Description

### Technical Field

The invention provides a mixing and dyeing device for dental resins for 3D printing and it is arranged for contactless dyeing by mixing fluid ingredients.

### Prior art

Device being subject-matter of the invention is intended to be used in laboratories, dental centres and universities. In the prior art, various solutions for mixers are known, both for dental applications and others, which are to mix at least two coloured materials in order to obtain a final product that meets some assumed requirements. In the dental industry, 3D printers and dental resins are used for making dental forms and other parts with a very high precision and accuracy.

Japanese document JP2022553195A discloses a system for dispensing a dyed product in a desired colour. The dispensing system may scan the desired colour and send relevant colour information to a calculation module. The calculation module sends instructions to control means of the dispensing device concerning the amount of each basic product required for reproducing the dyed product of the desired colour selected by the user.

Chinese document CN211159375U discloses a device for adjusting colours suitably to the outer wall paint. A colour sensor monitors in real time whether the colour of the coating liquid meets manufacturing requirements. The colour sensor sends a signal to the control panel and the control panel controls a filling machine to fill it, if the requirements are met. If the product manufacturing requirements are not met, the control panel or a control valve replenishes the dyeing agent or controls an infusion pump in order to feed the main solution into the colour adjustment tank, and then carries out mixing until the coating fluid meets the product requirements.

Chinese document CN206549543U disclose an automatic mixer for cosmetic raw materials, comprising a mixing tank, a mixing roller positioned within the mixing tank. Colour sensors are installed on an upper blade and a bottom blade, a weight sensor is installed on the bottom of the mixer. A controller is positioned outside the mixer and a controller signal input terminal is connected to the weight sensor and the colour sensor. Detection of colour is carried out, then comparing with the colour input in the controller, when the colour collected by the detector on the upper blade, centre blade and bottom blade is the same as the colour introduced by the control, the controller controls the mixing motor to cease its operation.

Chinese document CN215463679U discloses a device for pigment matching, comprising a sheath made of tempered glass. The right side of the tempered glass sheath is fixedly connected to a mounting frame of a colour detection module, and the mounting frame of the colour detection module is provided with an upper colour camera and a bottom colour camera. The upper colour camera and the bottom colour camera activate and maintain a monitoring state and evaluate difference in colours of a mixed solution in a glass cover at various heights of the upper and bottom layer to make sure that the solution is mixed uniformly enough. Then, they send data to a computer and the computer can evaluate the level of the colour of the final product based on viscosity and the colour of the mixed pigment solution.

Dental resins are conventionally sold in big packs of, inter alia, 500 g or 250 g and they come in seven colour versions. Prosthodontic laboratory using 3D printing should have a full scope of coloured resins and this generates very high costs and poses a problem concerning storing packs with resins - usually, prosthodontic clinics and laboratories occupy small premises. Even with all colours available in the market at hand, a prosthodontic specialist will not have a broad colour range obtainable in the traditional techniques. Dentition templets have sixteen colours in natural teeth shades and five whitened teeth shades.

In the devices known from the prior art, mixers do not offer optimum combining of the ingredients of the mixtures used in the field of stomatology which show higher viscosity and to not ensure mixing of small amounts of resin. Known devices have large dimensions which are impractical for small prosthodontic laboratories.

### Subject-matter of the invention

It is the aim of this invention to provide a mixer to carry out effective mixing process of a small amount of resin for a prosthesis of small dimensions and enables effective combining all the mixture ingredients as well to obtain an uniform colour of the mixture consistent with the colour of the patient's dentition.

The invention discloses a mixing and dyeing device for dental resins, comprising:
a housing with stabilizing means,
a mixing means arranged for mixing a resin housed in a container, and the mixing means is a motor mounted in the upper portion of the device and a mixer arm coupled thereto, mounted concentrically over the container, or the mixing means is a small magnetic mixing arm positioned within the resin container,
a container arranged within the housing, positioned concentrically with the mixing means,
at least two pigment tanks arranged for storing a resin dyeing pigment,
at least two dispensing means, where each pigment tank is connected to one dispensing means to force the material from the pigment tank into the container,
a colour sensor which based on a preset template colour is arranged for determining a suitable amount of the resin pigment fed from the pigment tanks and for scanning the obtained mixture for consistency with the preset colour,
a scales positioned under the container, arranged for providing weight of the resin pigment fed to the container,
a device closing sensor arranged for checking whether the device is closed before operation is initiated,
a temperature sensor arranged for checking a preset temperature inside the device,
a control panel positioned on the housing, arranged for determining operational parameters of all the elements of the device,
is characterized in that it comprises at least one heating means which heating means is arranged for heating the resin in the container, and the mixing arm has a tip to enable mounting replacement mixing tips,
wherein the colour sensor is arranged for scanning the patient's dentition.

Preferably, the colour sensor is arranged for receiving at least one parameter related to the colour of the preset template resin from scanning the preset template colour.

In one preferable embodiment, the colour sensor is arranged for receiving at least one parameter related to the preset template resin from the control panel.

In one embodiment, at least one heating means is positioned under the container.

The heating means is an electric heating mat which is arranged for heating the surface on which the container is put.

In another practical embodiment, at least one heating means is positioned in the rear portion of the housing, behind the container.

Preferably, the heating means is an electric heater with a fan, and the electric heater and the fan are positioned within the housing.

The stabilizing means are antislip and shock absorbing feet.

Preferably, the container is arranged for containing from 50 g, preferably from 100 g, to 250 g of resin.

In one embodiment, the dispensing means dispense the pigment with an accuracy of up to 1 g, preferably up to 0.1 g, and more preferably up to 0.01 g, and the most preferably up to 0.001 g.

The dispensing means are arranged for dispensing 100 g of pigment.

In another practical embodiment, at least one dispensing means is a pump arranged for automatic dispensing of pigment from the pigment tank.

In one embodiment, at least one dispensing means is a piston applicator.

In another embodiment, at least one piston applicator has a knob for adjustment of the volume of the fluid material being fed.

The housing comprises a window panel to limit penetration of UV radiation into the device.

### Advantageous effects of the invention

Thus presented subject-matter of the invention makes it possible to automate the operation of the mixer, and therefore the process for mixing and selection of colour of the resin is much faster and simpler. This feature is also favoured by compactness and solidity of the whole construction, where all the subassemblies are positioned in one device. The device according to the invention is compact and this enables comfortable operation in limited spaces of prosthodontics laboratories. It is possible to position the mixer on a table or a work bench in a small laboratory. The mixer enables preparation of a resin for dental prosthesis of small dimensions. Operation of the device is intuitive due to a tactual control panel. The device enables obtaining of resin colouring in minimum 16 colours. The mixer according to the invention makes it possible to prepare a resin in a minimum amount necessary for 3D printing 3D - even 100 g.

### Brief description of the drawings

The invention will be presented in more detail in a preferable embodiment, with reference to the enclosed drawings in which:
- Fig. 1-: shows a mixing device, in which mixing is carried out mechanically,
- Fig. 2 -: shows a mixing device, in which mixing is carried out magnetically.

### List of reference symbols:

- 1-: housing
- 2 -: motor
- 3 -: motor mount
- 4-: piston applicator
- 5 -: mixing arm
- 6 -: pigment tank
- 7 -: container
- 8 -: replaceable mixing tip
- 9 -: scales
- 10 -: heating means
- 11-: colour sensor
- 12 -: control panel
- 13 -: colour sensor chamber
- 14 -: small magnetic mixing arm
- 15 -: stabilizing means

### Detailed description of a preferable embodiment of the invention

A mixing and dyeing device for dental resins is built of a housing 1 with a stabilizing means 15, a mixing means, a container 7 positioned within the housing 1, at least two pigment tanks 6, at least two dispensing means 4, a colour sensor 11, a scales 9, a device closing sensor, a temperature sensor, a control panel 12, and at least one heating means 10.

In this embodiment the stabilizing means 15 are antislip and shock absorbing feet, and the housing 1 comprises a window panel to limit penetration of UV radiation into the device.

Mixing of the material is effected suitably to the mixing means. Mixing in the device is carried out mechanically or magnetically. The mixing means is arranged for mixing resin inserted in the container 7. The mixing means is a motor 2 mounted in the upper portion of the device and a mixing arm 5 coupled thereto, mounted concentrically over the container 7, or the mixing means is a small magnetic mixing arm 14 positioned within the resin container 7.

Mechanical mixing is effected via a motor 2 and a mixing arm 5. The mixing process is carried out at a rotation velocity within the range of 500-5500 rpm. Magnetic mixing is effected via a small magnetic mixing arm 14, and the rotation range of the small magnetic mixing arm 14 is within 50-2200 rpm. The manner of operation consists on variable rotating magnetic field to control the mixing arm (or, a dipole).

Preferably, the motor 2 in the mechanical mode is a motor 2 with a power within the range of 100-650 W, rated voltage of 220-240 V and frequency of 50/60 Hz and preferably it is positioned in the upper portion of the housing 1. The operational parameters of the motor are set on the control panel 12 for the timing and rotational ranges of the motor. In this example, the motor 2 is mounted to the housing 1 by means of a motor mount 3. In this example, the motor 2 is positioned on a leading screw which enables positional adjustment of the motor 2, along with a mixing arm 5 coupled therewith, relative to the container 7.

In a further embodiment, in which mixing is effected magnetically, the motor 2 is positioned within the bottom portion of the housing 1. The motor 2 activates movement of the small magnetic mixing arm 14. The range of velocity of the small magnetic mixing arm 14 is within the range of 80-1600 rpm, it operates at the rated voltage of 220-240 V at a frequency of 50/60 Hz. The power of the mixing device, the motor 2 is within the range of 500-1100 W.

The mixing arm 5 has a tip that makes it possible to couple replaceable mixing tips. In this example, the tip of the mixing arm 5 is terminated with a thread and replaceable tips are replaced manually when the device is turned off. The replaceable mixing tips enable obtaining higher mixing velocities according to material density.

The control panel 12, in one embodiment, in a manual version, has knobs and power-on buttons. The knobs correspond to controls of the scaled timer programmer, motor rotational velocity adjustment and temperature set-ups in the device. In another embodiment, control is performed automatically by means of a liquid crystal touch screen. For turning off the device, a physical rocker switch button is provided. On the control panel 12 the current operational status of the device can be read out, as well as in an application for mobile devices. On the control panel 12 it is possible to turn heating on and to control the distance between the motor 2 and the container 7.

The container 7 is positioned within the housing 1 and it is arranged concentrically with the mixing means. The container 7 is seated immovably and preferably it is secured immovably via knurled nuts. The container 7 is preferably arranged for mixing from 50 g, preferably from 100 g, up to 250 g of resin.

The dispensing means 4 forces the material from the pigment tanks 6 into the container 7. Each pigment tank 6 is connected to one dispensing means 4 to force the material from the pigment tank 6 into the container 7. The device comprises at least two pigment tanks 6 arranged for storing dental pigments. Each pigment tank 6 comprises pigment in a different colour or in a different shade of a given colour. The dispensing means 4 are arranged for dispensing small amounts of pigment. In this embodiment, this is 100 g of pigment. Preparation of such a small amount of resin requires accurate dispensing of pigment and the dispensing accuracy is at a level of 0.001 g. Small amounts of pigment are necessary for making, for example, a temporary or permanent crown of a tooth characterized by a small size. A big mixer, for mixing a large amount of pigment, would not be useful for stomatology applications. The dispensing means 4 dispense pigment with an accuracy of up to 1 g, preferably up to 0.1 g, more preferably up to 0.01 g, and the most preferably up to 0.001 g.

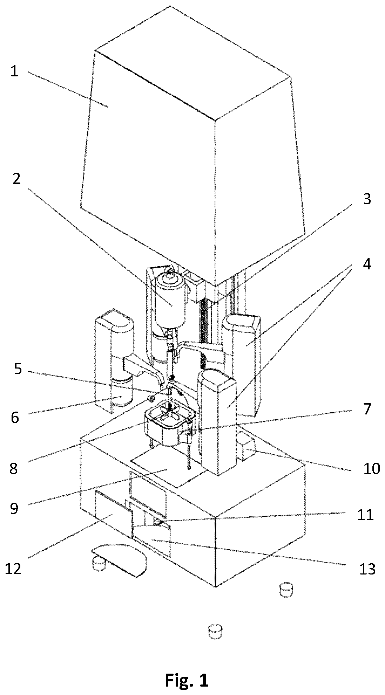

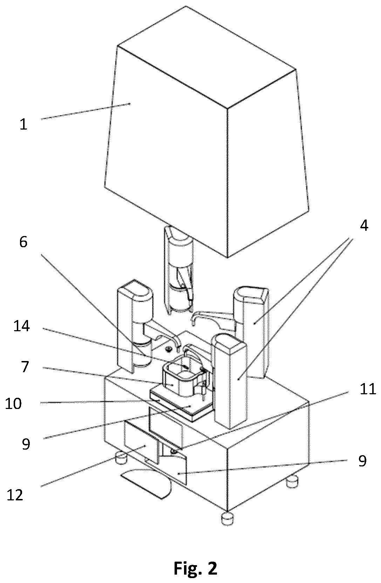

In one embodiment, the dispensing means is a piston applicator. The device in the embodiments shown in Figs. 1 and 2 has four piston applicators and four pigment tanks 6. Preferably, the device comprises from two to six pigment tanks 6 and thus dispensing means 4.

The applicator piston, in this embodiment, has a knob for adjusting the volume of the fluid material - pigment - being fed. The adjustment knob has a frustoconical shape and is positioned in the housing of the piston, perpendicularly to the axis thereof. The adjustment knob limits the upwards operational range (upwards and downwards) of the piston and thus the amount of the collected material, pigment, from the pigment tank 6 is controlled. The piston applicator can be adjusted manually by means of the volume adjustment knob, or automatically via a control module.

In an embodiment in which automatic adjustment is used via a control module, controlling of the operation of the piston (upwards and downwards) is effected by a linear motor. The linear motor, upon receipt of feedback, from the scales 9 and the control module, that the expected amount of pigment has been fed from the container 7, will stop its own operation and thus operation of the piston applicators.

In another embodiment, the dispensing means 4 is a pump arranged for automatic feeding pigment from the pigment tank 6. The control module controls operation of pumps connected to the pigment tanks 6 and drawing pigment therefrom. Pigment tanks 6, in this embodiment, are secured by means of threaded reducers to the pump housing. The control module stops power supply and pump operation when information is received that the desired amount of the pigment in the selected colour has been delivered to the container 7. Feeding pigment is effected with the use of pumps powered by the voltage of 12 V.

In another embodiment, the device may comprise dispensing means 4, among which at least one dispensing means 4 is a pump while the remaining dispensing means are piston applicators. Operation of the dispensing means 4, in this embodiment, is arranged for automatic feeding pigment from the pigment tank 6 into the container 7.

Colour sensor 11 is arranged for determining proper amounts of pigments fed from the pigment tanks 6 and for scanning the obtained mixture for consistency with a preset template colour. The colour sensor 11 is also arranged for scanning of the colouring of the patient's dentition. The scanned colour is the template colour. The colour sensor 11 is arranged for operation under various illumination and humidity conditions: within the oral cavity, in full illumination in the laboratory, and within the chamber 13 of the colour sensor. The scanning function of the colour sensor 11 is implemented by checking, by the colour sensor 11, the colour of the obtained resin, and then this information is sent to the control module. The control module compares the obtained resin colour with the preset one and decides on colouring correctness of the material mixed. The colour sensor 11 cooperates with the control module to control the amount of pigment being fed, and which in this embodiment controls the dispensing means 4.

The colour sensor 11 is a sensor removable from the chamber 13 of the colour sensor. In this example, it is wired but it may operate wirelessly. The colour sensor 11 should show electromagnetic compatibility according to norm IEC 60601-1-2 and meet the safety requirements for the patient, medical professionals or operator. The colour sensor 11 should meet the requirements of ISO13485, for a quality management system for medical products. Preferably, the field of view of the scanner should not exceed 20 x 20 mm.

The control module is actually a control machine, in this embodiment, a computer which controls operation of the entire device. The control module manages, inter alia, colouring consistency, reading out the values from the scales. The control module has an application embedded in its memory, executed with the use of the control panel 12.

The dispensing means 4 provide suitable pigments, from the pigment tanks 6, in appropriate amounts to obtain the template colour. The control module stops operation of the dispensing means 4 upon receipt information of that the desired amount of the selected pigment colour has been provided to the container 7.

Selection of the pigment colour from the pigment tank 6 is based on operation of the colour sensor 11 which following scanning of a sample with the template colour transmits to the dispensing means 4 information concerning precise amounts of pigments of various colours that should be added into the container 7. When the resin mixture, final product, is prepared, the colour sensor 11 scans the obtained mixture and evaluates the level of colour consistency. In the case of preparation of the resin of a colour inconsistent with the preset one, the colour sensor 11 and the control module evaluate the colour consistency level and propose a solution to enable obtaining the proper colour. The colour sensor 11 cooperates with the control module as to the amount of the pigment being fed.

In another embodiment, the colour sensor 11 is arranged for receiving at least one parameter concerning the colour of the template resin, from the colour sensor 11. In another example, the colour sensor 11 receives at least one parameter concerning the colour of the template resin from the control panel 12 - the user inputs it manually. In this embodiment, the colour sensor 11 is positioned within the chamber 13 of the colour sensor. Verification of the template colour vs. the colour of the obtained mixture is carried out via introduction of a sample into the chamber 13 of the colour sensor.

The device also comprises a scales 9 positioned below the container 7, to provide information about the amount of the pigment fed to the container 7. Preferably, the scales 9 makes it possible to verify the amount of the pigment being fed with a high accuracy of up to 0.001 g, and this enables accurate dispensing small amounts of the pigment dispensed. It should be noted that in some cases a lower sensitivity, i.e., of up to 1 g, 0.1 g, or 0.01 g may be sufficient. The closing device sensor is positioned in the door of the housing 1 of the device. In this embodiment, the housing 1 is built of a door and a body. During opening of the housing 1 there occurs an interruption of the signal between the two parts of the housing - door and body. Then a signal about opened housing 1 is sent to the control module and on the control panel 12 an opened door screen is displayed.

The temperature sensor is arranged for checking a preset temperature inside the device. The temperature sensor is positioned within the housing 1, in its lower part. The temperature sensor operates on a similar basis as in 3D DLP (Digital Light Processing) printers.

The device comprises at least one heating means 10 arranged for heating the resin inside the container. In one embodiment, at least one heating means 10 is positioned within the rear portion of the housing 1, behind the container 7 with the resin and pigment being mixed. Warm air within the device also heats the resin in the container 7. Wart air flow enhances mixing properties of the resin with pigment. Heating of the resin being mixed leads to optimum bonding thereof. Resins for dental applications have a higher viscosity than the materials used for other kinds of printing. Higher temperature lowers viscosity of the resin being mixed and makes it possible to obtain the best properties for a dental resin mixture. Uniform consistency of the prepared final mixing product is obtained. Setting a constant temperature range within the housing 1 enables obtaining uniform conditions regardless of the ones outside.

In this embodiment, the heating means 10 is an electric heater and a fan, closed in a housing. The fan is positioned above the electric heater which enables effective distribution of warm air within the housing 1 of the device and the heat reaching the resin being mixed.

In another embodiment, at least one heating means 10 is positioned under the container 7. In this embodiment, the heating means 10 is an electric heating mat, supplied with a voltage of 12/24 V. This heating means 10 heats the surface on which the container 7 with the resin being mixed it put. The temperature sensor checks and monitors the temperature inside the housing 1.

In another embodiment, the device comprises at least one heating means positioned under the container 7 and at least one heating means positioned in the rear portion of the housing 1, behind the container 7.

Upon turning on the device, the rotational velocity of the motor and the working time of the device are input in the control panel 12. Then the base material is poured into the container 7. The base material is a prepared dental resin which changes its colour when pigments are added from the pigment tanks 6. The user puts a sample of the template material within the chamber 13 of the colour sensor. In this example, the colour sensor 11 scans the template colour and transmits information to the control panel 12 and thus to the control module. An information is displayed showing which particular pigment tanks 6, along with the respective pigments, should be mounted in the device. In another embodiment, the user inserts the data concerning the template colour manually. When the pigment containers are mounted, the control panel 12 displays safety-related screens: "pigment tanks 6 correctly secured?", "base material poured into the container 7?", "initiate mixing?".

Then heating of the inside of the device is activated via the heating means 10 to obtain the optimum effect of mixing. When the messages are accepted, the mixing means starts operation and mixing is carried our according to the preset rotation and timing regime.

In one embodiment, dispensing of suitable pigments from the mounted pigment tanks 6 is carried out manually. In another example, dispensing is effected automatically, controlled by the control module.

When the mixing process is complete, on the screen of the device a suitable message is displayed concerning further manner of processing. It is necessary to decide whether a sample of the mixed material is to be inserted in order to check correctness of the colour with the template colour, or the mixing means is to be demounted to enable safe removal of the container 7 with the mixed material.

A sample of the mixed resin is positioned within the chamber 13 of the colour sensor. The colour sensor 11 scans the colour of the obtained resin mixture. The control module software checks for consistency of the prepared mixture with the template colour and suggests optional further actions. When inconsistency of the colour with the template colour is considerable, another resin pigment may be added to enable obtaining of another resin shade.

## Claims

1. A mixing and dyeing device for dental resins, comprising:
a housing (1) with stabilizing means (15),
a mixing means, arranged for mixing resin housed within the container (7), wherein the mixing means is a motor (2) mounted in the upper portion of the device and a mixing arm (5) coupled thereto, concentrically over the container (7), or the mixing means is a small magnetic mixing arm (14) housed within the resin container (7),
the container (7) positioned within the housing (1), positioned concentrically with the mixing means,
at least two pigment tanks (6) arranged for storing a resin dyeing pigment,
at least two dispensing means (4), each pigment tank (6) being connected to one dispensing means (4) to force material from the pigment tank (6) into the container (7),
a colour sensor (11), which based on a template colour is arranged to define the proper amounts of the resin pigments fed from the pigment tanks (6) and to scan the obtained mixture for consistency with the preset template colour,
a scales (9) positioned below the container (7), arranged for providing weight of resin pigment fed into the container (7),
a device closing sensor, arranged for checking whether the device is closed before its operation is initiated,
a temperature sensor, arranged for checking a preset temperature inside the device,
a control panel (12), housed within the housing (1), arranged for determining operational parameters of all the elements of the device,
**characterized in that** it comprises at least one heating means (10), which heating means (10) is arranged for heating the resin in the container (7), and the mixing arm (5) has a tip enabling securing replaceable mixing tips,
wherein the colour sensor (11) is arranged for scanning the patient's dentition.

2. The device according to claim 1 **characterized in that** the colour sensor (11) is arranged for receiving at least one parameter concerning the colour of the template resin from scanning of the template colour.

3. The device according to claim 1 **characterized in that** the colour sensor (11) is arranged for receiving at least one parameter concerning the colour of the template resin from the control panel (12).

4. The device according to any one of claims 1-3 **characterized in that** the at least one heating means (10) is positioned under the container (7).

5. The device according to claim 4 **characterized in that** the heating means (10) is an electric heating mat which is arranged for heating the surface on which the container (7) is put.

6. The device according to any one of claims 1-5 **characterized in that** the at least one heating means (10) is positioned in the rear portion of the housing (1), behind the container (7).

7. The device according to claim 6 **characterized in that** the heating means (10) is an electric heater with a fan, wherein the electric heater and the fan are positioned within the housing.

8. The device according to any one of claims 1-7 **characterized in that** the stabilizing means (15) are antislip and shock absorbing feet.

9. The device according to any one of claims 1-8 **characterized in that** the container (7) is arranged for storing from 50 g, preferably from 100 g to 250 g of resin.

10. The device according to any one of claims 1-9 **characterized in that** the dispensing means (4) dispense pigment with an accuracy of up to 1 g, preferably up to 0.1 g, more preferably up to 0.01 g, and the most preferably up to 0.001 g.

11. The device according to any one of claims 1-10 **characterized in that** the dispensing means (4) is arranged for dispensing 100 g of pigment.

12. The device according to any one of claims 1-11 **characterized in that** the at least one dispensing means is a pump arranged for automatic dispensing pigment from the pigment tank (6).

13. The device according to any one of claims 1-12 **characterized in that** the at least one dispensing means is a piston applicator (4).

14. The device according to any one of claims 1-13 **characterized in that** the at least one piston applicator (4) has a knob for adjustment of the volume of the fluid material being fed.

15. The device according to any one of claims 1-14 **characterized in that** the housing (1) comprises a window panel to limit penetration of UV radiation into the device.
